## Europäisches Patentamt
## European Patent Office
## Office européen des brevets

(11) Veröffentlichungsnummer: **0 277 475**
**A2**

(12) # EUROPÄISCHE PATENTANMELDUNG

(21) Anmeldenummer: 88100046.7

(22) Anmeldetag: 05.01.88

(51) Int. Cl.4: **E21B 17/08** , E21B 17/042 , F16L 15/04

(30) Priorität: 03.02.87 DE 3703052

(43) Veröffentlichungstag der Anmeldung:
10.08.88 Patentblatt 88/32

(84) Benannte Vertragsstaaten:
AT BE CH DE ES FR GB GR IT LI LU NL SE

(71) Anmelder: **Hoesch Aktiengesellschaft**
**Eberhardstrasse 12**
**D-4600 Dortmund 1(DE)**

(72) Erfinder: **Gross, Heinz, Dipl.-Ing.**
**Reichsmarkstrasse 142**
**D-4600 Dortmund-Syburg(DE)**
Erfinder: **Koch, Friedrich-Otto**
**Auf der Bleiche 44**
**D-4750 Unna-Massen(DE)**
Erfinder: **Lang, Mattias, Dipl.-Ing.**
**Hagenschiessstrasse 14**
**D-7530 Pforzheim(DE)**
Erfinder: **Peeck, Adolf, Dr.**
**Schützenstrasse 204**
**D-3061 Wiedendahl(DE)**
Erfinder: **Spliethoff, Hans, Dipl.-Ing.**
**Mozartstrasse 1**
**D-4400 Münster(DE)**
Erfinder: **Venema, Wolfgang**
**Schwalbenweg 4**
**D-4730 Ahlen 4(DE)**
Erfinder: **Duisberg, Jürgen, Dipl.-Ing.**
**Am Ischeland 32**
**D-5800 Hagen(DE)**
Erfinder: **Scholl, Robert, Dipl.-Ing.**
**Traubenweg 8**
**D-4600 Dortmund 30(DE)**

(54) **Gasdichte Rohrverbindung für Futter- und/oder Steigrohre.**

(57) Gasdichte Rohrverbindung für Futter-und/oder Steigrohre innerhalb eines Bohrlochs, bestehend aus einem mit Außengewinde versehenen Zapfenteil und einem mit dazu passendem Innengewinde versehen Muffenteil, wobei im Gewindebereich des Muffen- und/oder Zapfenteiles eine Nut zur Aufnahme eines verformbaren Dichtungsringes existiert, der bei verschraubter Rohrverbindung durch das Nutgrundprofil des Muffen-und/oder Zapfenteiles und das Gewindeprofil des jeweils anderen Verbindungsteiles begrenzt und geformt wird und bei welcher die von Nutgrundprofil des Muffen-und/oder Zapfenteiles und Gewindeprofil des jeweils anderen Verbindungsteiles umschlossene Querschnittsfläche über den Nutverlauf konstant gehalten und gleich oder größer als die Querschnittsfläche des verformbaren Dichtungsringes vor der Verschraubung ist.

*Fig. 3*

## Gasdichte Rohrverbindung für Futter-und/oder Steigrohre

Die Erfindung trifft eine gasdichte Rohrverbindung für Futter-und/oder Steigrohre innerhalb eines Bohrloches, bestehend aus einem mit Außengewinde versehenen Zapfenteil und einem mit dazu passendem Innengewinde versehenen Muffenteil, wobei im Gewindebereich des Muffen-und/oder Zapfenteiles eine Nut zur Aufnahme eines verformbaren Dichtungsringes existiert, der bei verschraubter Rohrverbindung durch das Nutgrundprofil des Muffen-und/oder Zapfenteiles und das Gewindeprofil des jeweils anderen Teiles begrenzt und geformt wird.

Bekannt ist eine derartig einfach herzustellende Rohrverbindung z. B. aus der API-Specification for Casing, Tubing and Drill Pipe API Spec. 5A. Es sind dort Schraubmuffen gezeigt, die mit 2 Nuten im Gewindebereich versehen sind, welche der Aufnahme von Dichtungsringen aus im wesentlichen Polytetraflourethylen (Teflon) dienen. Diese Nuten besitzen dabei eine konstante Breite über den Umfang.

Die Dichtungsringe werden beim Aufschrauben der Muffen auf die zugehörigen Zapfenenden entsprechend deren Gewindeform eingeschnitten und in den Nutquerschnitt gequetscht. Es besteht jedoch bei dieser Verbindungsart in Gefahr, daß einzelne Gewindegänge der Muffe oder des Zapfens beim Einschrauben durch den Teflonring - der zwar verformbar, aber nicht kompressibel ist -abgequetscht werden. Darüber hinaus ist der genormte Querschnitt des eingelegten Dichtungsringes so groß, daß Material des Dichtungsringes in Gewindebereiche außerhalb der Nutquerschnitte gequetscht werden kann, was dann zum partiellen Aufweiten der Muffe bzw. Eindrücken des Zapfens und zur Undichtigkeit des Gewindes führt.

Ebenfalls bekannt ist eine solche Rohrverbindung aus der DE-AS 23 16 059, bei der die Nut zur Aufnahme des Dichtungsringes (12) sich vor bzw. hinter dem Gewindebereich der Muffe befindet, jedoch noch vom Gewindebereich des Zapfens überdeckt wird.

Hierbei ist neben der zur Bereitstellung der Nutbreite notwendigerweise länger ausgebildeten Muffe die außerordenlich hohe und unkontrollierte Quetschung des Dichtungsringes nachteilig, da diese zum Öffnen der metallischen Dichtflächen bzw. der Gewinde beitragen kann.

Der vorliegenden Erfindung liegt also die Aufgabe zugrunde, eine zum sicheren Mediumstransport geeignete, einfachst durch einen verformbaren Dichtungsring herzustellende gas-und flüssigkeitsdichte Standard-Rohrverbindung bereitzustellen, bei der jedoch eine Störung des Dichtvorganges durch unkontrollierte Quetschung des Dichtungsringes und nachfolgendes Abscheren von Gewindegängen oder durch Öffnen des Gewindes sicher und bei allen Verschraubungszuständen vermieden wird.

Gelöst wird diese Aufgabe bei der gattungsgemäßen Rohrverbindung durch die kennzeichnenden Merkmale des Hauptanspruchs.

Weiterbildende Merkmale sind in den Unteransprüchen erfaßt.

Ausgehend von dem allgemeinen Erfindungsgedanken, daß nämlich bei einer Rohrverbindung mit Hilfe eines verformbaren Dichtungsringes in der Nut eines Gewindebereiches dieser Dichtungsring nur formgebend beeinflußt werden, jedoch nicht durch unkontrollierte Kompression schädlich hohe Drücke zwischen den Gewindeflächen aufbauen darf, bietet die offenbarte Rohrverbindung durch die Bereitstellung einer über den Nutverlauf konstanten Querschnittsfläche zwischen Nutgrundprofil des Muffen-und/oder Zapfenteiles und Gewindeprofil des jeweils anderen Verbindungsteiles den Vorteil einer störungsfreien Verschraubung bei sicherem Erreichen der Gasdichtheit in einem engen und definierten Drehmomentenbereich.

Überraschenderweise ist bisher bei der Herstellung solcher Nuten für Dichtungsringe zwar auf eine über den Umfang konstante - wenn auch völlig wahlfreie - Breite geachtet worden, nicht bedacht wurde jedoch, daß sich die Nut ortsfest am Umfang befindet, während die Gewindegänge - in differenzial kleinen Abschnitten und über den Umfang betrachtet -ihre Lage relativ zur Nut ändern. Die zwischen Nutgrundprofil und Gewindeprofil eingeschlossene Querschnittsfläche ist daher bei den im Stand der Technik gezeigten Verbindungen über den Umfang veränderlich.

Erst mit der Konstanthaltung der o. g. Querschnittsfläche über den gesamten Umfang aber ist eine sichere Gasdichtigkeit zu erhalten. Vorteilhaft ist es weiterhin hierbei, diese Querschnittsfläche größer oder gleich der Querschnittsfläche des verformbaren Dichtungsringes vor der Verschraubung auszulegen. Durch diese Maßnahmen wird im verschraubten Zustand der Dichtungsring volumenkonstant verformt und ist keiner Kompression unterworfen. Damit wird eine umzulässige Druckerhöhung im Gewindebereich vermieden.

Neben der der Änderung des Gewindeprofils entsprechenden Veränderung der Nutbreite oder -tiefe über den Umfang besteht eine besonders einfache Methode zur Konstanthaltung des Querschnitts zwischen Nutgrundprofil des Muffen-und/oder Zapfenteiles und Gewindeprofil des jeweils anderen Verbindungsteiles darin, die Nutbreite so zu wählen, daß sie dem n-fachen der Gewindesteigung entspricht, wobei n größer oder gleich 2 und eine ganze Zahl ist.

Hierdurch wird neben einem für den Teflonring noch verträglichen Umformungsgrad bei n gleich 2 ebenfalls gewährleistet, daß die Summe der Abständ der beliebig eng beieinanderliegenden Punkte auf der Geweindeprofilkurve von der mittleren Flankenlinie größer oder gleich Null wird. Damit "passen" - ausgehend von der mittleren Flankenlinie - alle Geweindespitzen in die Gewindetäler und der eingeschlossene Querschnitt bleibt konstant.

Je nach Agressivität und Konsistenz der in den Rohren transportierten Medien erfolgt vorteilhafterweise eine an den entsprechend Standzeiten orientierte Auswahl zwischen Dichtungsringen aus Metall oder Kunststoff.

Anhand eines Ausführungsbeispieles soll die Erfindung näher erläutert werden. Es zeigen:

Fig. 1 eine erfindungsgemäße gasdichte Rohrverbindung als Muffenverbindung im. Halbschnitt

Fig. 2 einen vergrößerten Querschnitt des verformten Dichtungsringes nach dem Verschrauben

Fig. 3 die relativ zur Nut in der Form veränderliche, jedoch konstante, zwischen Nutgrundprofil des Muffenteils und Gewindeprofil des Zapfenteils eingeschlossene Fläche im Abstand eines halben Nutumfanges.

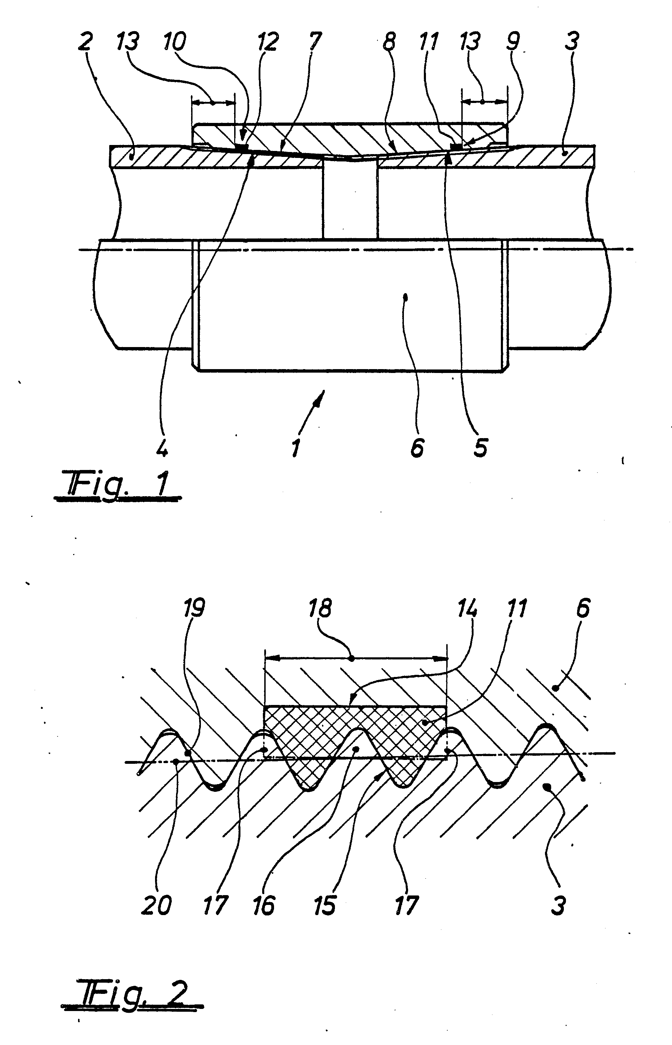

Die Fig. 1 zeigt eine erfindungsgemäße 5 1/2"-Standard-Futterrohrverbindung 1, bei der die zu verbindenden Rohre einen Durchmesser von 139,7 mm und eine Wanddicke von 6,98 mm aufweisen und bei welcher beide rohrenden 2 und 3 außen mit konischen Gewinden 4 und 5 versehen sind. Die Muffe 6, die innen mit entsprechenden konischen Gewinden 7 und 8 ausgestattet ist, verbindet in dem hier gezeigten verschraubten Zustand beide Rohrenden.

Bei den hier verwendeten Gewinden (4, 5, 7 und 8) handelt es sich um ein langes Rundgewinde (LTC) gemäß API Spec. 5 B. In der dargestellten Ausführung sind die Nuten 9 und 10 zur Aufnahme der Dichtungsringe 11 und 12 eingestochen innerhalb des Gewindebereiches der Muffe 6 in einem Abstand 13 von jeweiligen Muffenende.

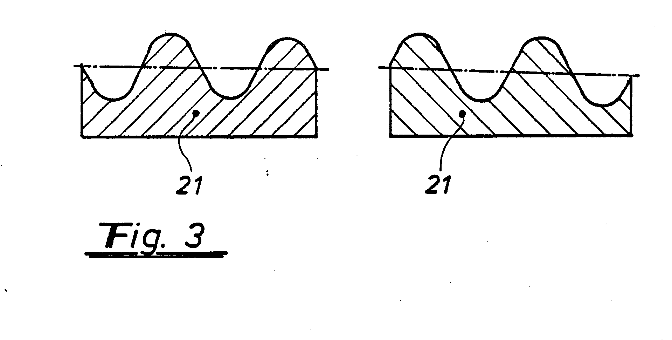

Fig. 2 zeigt vergrößert und im Schnitt den zwischen Nutgrundprofil 14 und Gewindeprofil 15 eingeformten Dichtungsring 11 an einem beliebigen Umfangspunkt der Muffe 6. Die ursprüngliche Form und Fläche 16 des Dichtungsringes 11 vor dem Verschrauben wird durch die strichpunktierte Linie 17 dargestellt. Deutlich sichtbar ist hier die zur Begrenzung des Umformungsgrades des Dichtringes aus Polytetraflourethylen und zur Wahrung eines konstanten eingeschlossenen Querschnitts über den Nutumfang auf 2 Gewindesteigungen festgelegte Mindestbreite 18 des Nutgrundprofils 14. Eine Integration der durch die Profillinie 19 und die mittlere Flankenlinie 20 gebildeten Flächenelemente über die Mindestbreite 18 ergibt erfindungsgemäß einen Wert größer oder gleich Null.

Die Fig. 3 zeigt bei konstantem Betrag der zwischen Nutgrundprofil 14 des Muffenteiles und Gewindeprofil 15 des Zapfenteiles eingeschlossenen Querschnittsfläche 21 deren Formänderung relativ zur Nut 9 innerhalb eines halben Nutumfangs.

## Ansprüche

1. Gasdichte Rohrverbindung für Futter- und/oder Steigrohre innerhalb eines Bohrlochs, bestehend aus einem mit Außengewinde versehenen Zapfenteil und einem mit dazu passendem Innengewinde versehenen Muffenteil, wobei im Gewindebereich des Muffen-und/oder Zapfenteiles eine Nut zur Aufnahme eines verformbaren Dichtungsringes existiert, der bei verschraubter Rohrverbindung durch das Nutgrundprofil des Muffen-und/oder Zapfenteiles und das Gewindeprofil des jeweils anderen Teiles begrenzt und geformt wird, dadurch gekennzeichnet, daß die nach dem Verschrauben von Muffenteil (6) und Zapfenteil (2, 3) existierende, von Nutgrundprofil (14) des Muffen-und/oder Zapfenteiles und Gewindeprofil (15) des jeweils anderen Teiles umschlossene Querschnittsfläche (21) über den Nutverlauf konstant und gleich oder größer ist als die Querschnittsfläche (16) des verformbaren Dichtungsringes (11, 12) vor der Verschraubung.

2. Gasdichte Rohrverbindung nach Anspruch 1, dadurch gekennzeichnet, daß die Breite (18) des Nutgrundprofils (14) des Muffen-und/oder Zapfenteiles (6, 2, 3) dem n-fachen der Gewindesteigung entspricht, wobei n größer oder gleich 2 und eine ganze Zahl ist.

3. Gasdichte Rohrverbindung nach Anspruch 1 oder 2, dadurch gekennzeichnet, daß der verformbare Dichtungsring (11, 12) aus Metall besteht.

4. Gasdichte Rohrverbindung nach Anspruch 1 oder 2, dadurch gekennzeichnet, daß der verformbare Dichtungsring (11, 12) aus Kunststoff besteht.

_Fig. 1_

_Fig. 2_

21

21

## Fig. 3